# EUROPEAN PATENT SPECIFICATION

(11) **EP 2 572 575 B1**
(45) Date of publication and mention of the grant of the patent: **12.11.2014**
(21) Application number: 12250148.9
(22) Date of filing: 06.09.2012
(51) Int. Cl.: A01K 89/01

(54) **A fixed spool fishing reel**
Angelrolle mit fester Spule
Moulinet de pêche à tambour fixe

(30) Priority: 20.09.2011 GB 201116267
(43) Date of publication of application: 27.03.2013
(73) Proprietor: Fox International Group Limited, Hainault Essex IG6 3UT (GB)
(72) Inventor: Taylor, Adam Richard Ellis, Loughton, Essex IG10 2QH (GB)
(74) Representative: Crouch, David John

(56) References cited:
- WO-A2-2010/112871
- FR-A- 1 115 185
- FR-A- 1 144 422

## Description

The present invention relates to a fixed spool fishing reel having a spool shaft and a hollow rotor shaft which is coaxial with the spool shaft and through which the spool shaft extends, the rotor shaft being able to rotate about the spool shaft, the reel being further provided with a handle shaft which extends transversely of and is offset relative to the spool shaft, there being a first gear coupled for rotation with the handle shaft and also having an axis of rotation which is transverse of and offset from the spool shaft, the said first gear engaging a second gear which is on the rotor shaft so that the respective axes of rotation of the first and second gears are mutually orthogonal.

A problem encountered with such a gear linkage as this is that because the respective axes of rotation of the said first gear and the said second gear are offset from one another there is a limitation imposed on the range of possible gear ratios between the rotation of the handle shaft and that of the rotor shaft. This is especially difficult in a construction of reel intended to provide two selective such gear ratios.

The present invention seeks to provide a remedy.

Accordingly, the present invention is directed to a fixed spool fishing reel having the construction set out in the opening paragraph of the present specification, characterised in that the said first gear is selectively coupled for rotation with the handle shaft and in that the handle shaft is also selectively coupled to drive a third gear, having an axis of rotation which is transverse of and in or substantially in the same plane as the spool shaft, the said third gear being on the opposite side of the spool shaft to that side of the spool shaft on which the said first gear is located, and having an axis of rotation which is closer to the spool of the reel than the axis of rotation of the said first gear, the said third gear engaging a fourth gear which is also on the rotor shaft closer to the spool than is the said second gear, the respective axes of rotation of the said third and fourth gears being mutually orthogonal, and in that the reel has a selector connected to change the gearing through which the handle shaft drives the rotor shaft from that comprising the said first gear and the said second gear, to that comprising the said third gear and the said fourth gear, thereby to change the gear ratio between rotation of the handle shaft and that of the rotor shaft.

An advantage of such a construction is that it enables the reel to have two selective gear ratios for the relative speeds of rotation of the handle shaft relative to the rotor shaft whilst providing a compact and relatively light construction which is relatively simple to manufacture.

These advantages are even more evident if the axis of rotation of the said first gear and the axis of rotation of the handle shaft are one and the same.

The said first gear and the second gear may be bevelled. Likewise, the said third gear and the said fourth gear may be bevelled. This improves the intermeshing of the gears.

The said selector may comprise sliding dogs which can be selectively slid into engagement with respective different gears respectively coupled to the said second gear and the said fourth gear. This enables a compact construction of the reel as a whole.

One of the said different gears may be the said first gear. This reduces the total number of gears required and hence again the weight of the reel is reduced and the compactness of the reel is improved.

Advantageously, the gear ratio between the rotation of the handle shaft and the rotation of the rotor shaft may be changed by the said selector between a gear ratio in the range from 5:1 to 8:1 to a gear ratio in the range from 1.5:1 to 3.5:1.

Preferably, the change in the gear ratio is between a ratio of 6.1:1 and a ratio of 2:1.

An example of a fixed spool fishing reel made in accordance with the present invention will now be described in greater detail with reference to the accompanying drawings, in which:
- Figure 1: shows a side view of a fixed spool fishing reel embodying the present invention;
- Figure 2: shows an axial sectional view of parts of the fishing reel shown in Figure 1;
- Figures 3a to 3g: show respectively side, plan, underneath, end, other side, other end, and perspective views of gearing of the reel shown in Figure 1;

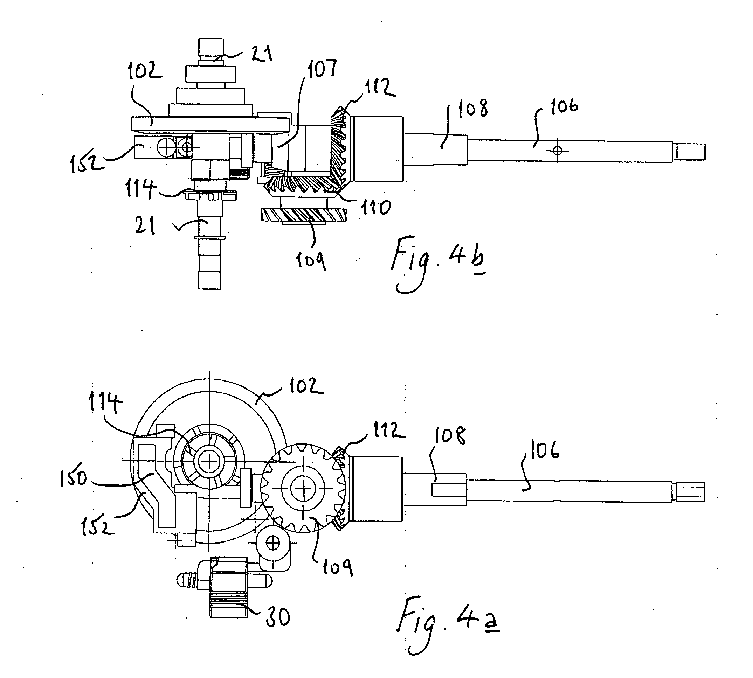

- Figures 4a and 4b: show side and plan views of the gearing shown in Figures 3a to 3g on a different scale, and with parts of what is shown in Figures 3a to 3g removed to reveal other parts of the construction of the reel shown in Figure 1.

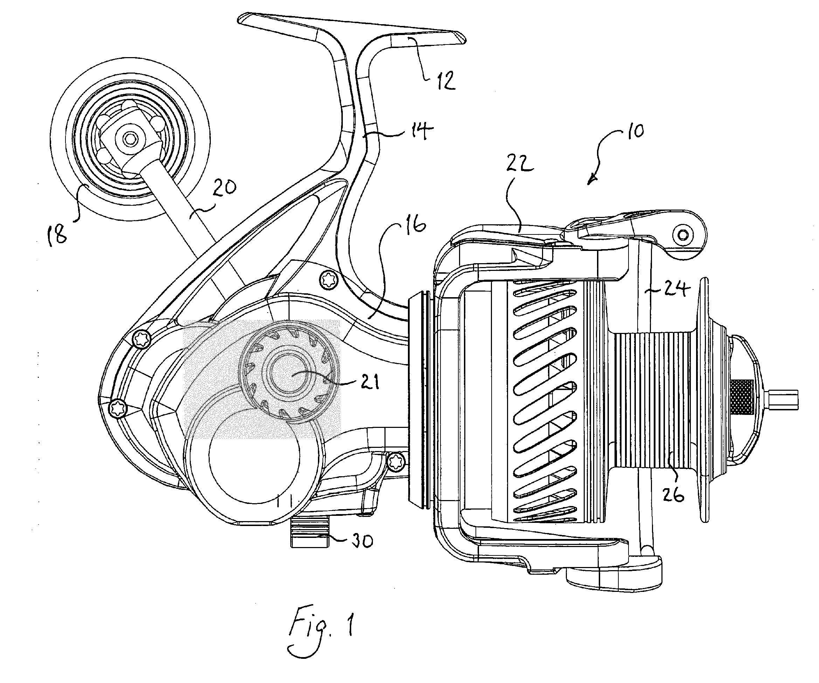

A fixed spool fishing reel 10 shown in Figure 1 comprises a mounting foot 12, a support arm 14 extending in an intended downward direction from the mounting foot 12 to the reel housing 16, a handle 18 rotatably mounted on a crank 20 connected to a handle shaft 21 which extends transversely through the housing 16, a bail arm 22 with a bail 24, and a skirted spool 26 extending forwardly from the front of the housing 16 with its axis approximately parallel to (in fact at an angle of 6° relative to) the foot 12 and hence to an angling rod to which the reel is attached when the latter is in use.

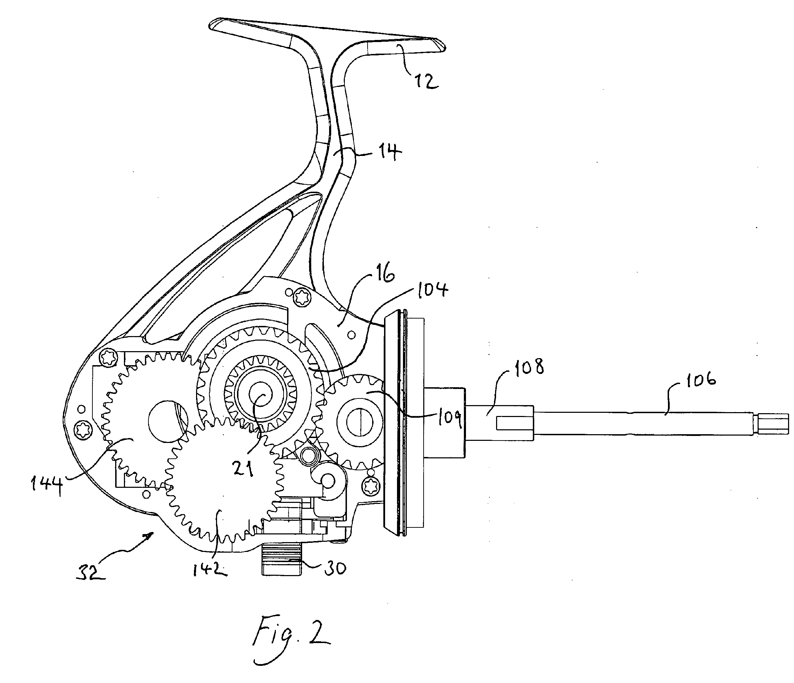

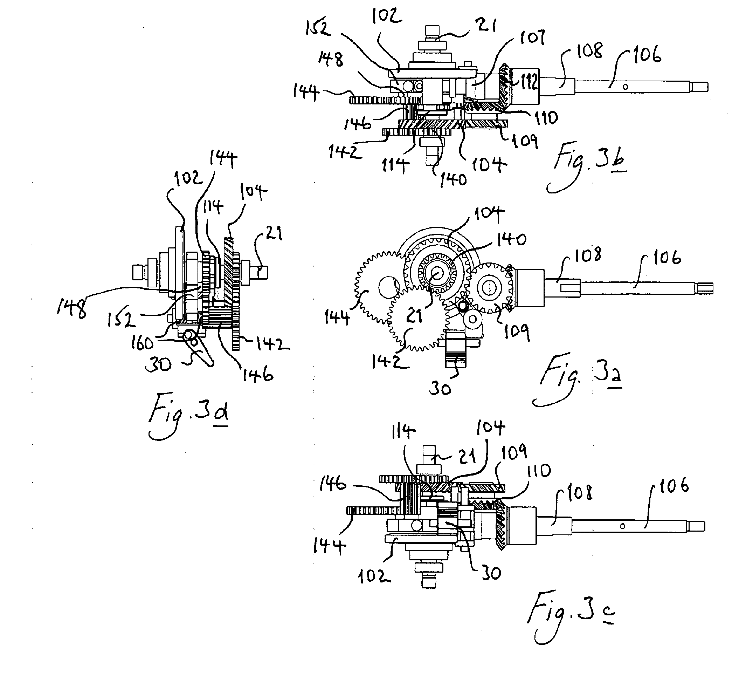

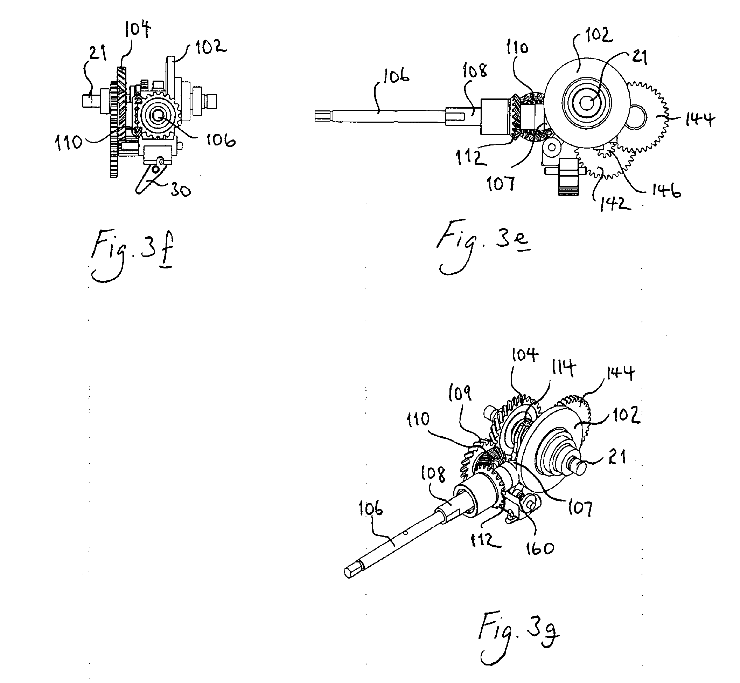

When in use, with fishing line (not shown) wound around the spool 26 and a rig (not shown) attached to the free end of the line, and with the bail arm 24 in a forward open position, the user holds the line against spillage with a finger as he prepares to cast the line and then sharply whips the rod and the reel with the free end of the line on the rigging attached thereto forwardly so that the rigging is cast forwards as the line spills off the front end of the spool. Once the rigging has been cast it drops many hundreds of feet below the surface of the water. The handle 18 is now rotated and the bail arm 24 is swiveled rearwardly to the closed position it has in Figure 1, to wind the line back on to the spool 26. This is effected by couplings within the housing 16 (not shown in Figure 1) which simultaneously cause rotation of the bail arm 22 about the axis of the spool 26 and reciprocation of the latter to and fro along its axis. This ensures an even lay of the line 28 on the spool 26. During this phase of operation of the reel, which results in the rigging being lifted towards the surface of the sea very rapidly, the ratio of turns of the bail arm 22 completes six turns for every single turn of the crank 20. In the event that a fish bites on the jigging as it is being raised in this fashion, a user operable lever 30 is now shifted into a second position to change the gearing by way of a gearing mechanism 32 (shown in Figures 2 and 3) within the housing 16. This changes the ratio of turns of the bail arm 22 to each turn of the crank 20 from 6.1:1 to 2:1.

Details of the manner in which this change of gear is effected is shown more clearly in Figures 3a to 3g.

The handle shaft 21 can be connected by releasable connection devices (not shown) to the handle 18 selectively at either one of its two ends, to provide a right- or left-handed reel. In both cases, the handle shaft 21 extends transversely of the spool shaft 106, and is offset relative thereto.

Two gear wheels 102 and 104 of different respective diameters are attached to the handle shaft 21 so as to be in respective spaced apart fixed positions on the handle shaft 21, but also so as to be rotatable relative thereto and also therewith.

A spool shaft 106 to which the spool 26 is attached extends at right angles to the handle shaft 21, longitudinally of the reel. The two gear wheels 102 and 104 are on opposite respective sides of the spool shaft 106. The gear wheel 102 meshes directly with a gear 107 formed on the end of a hollow rotor shaft 108 which is coaxial with and through which extends the spool shaft 106. Thus the respective axes of rotation of the gears 102 and 107 are mutually orthogonal. The respective diameters of the gears 102 and 107 are such as to give a gear ratio of substantially 6.1:1. The gears 102 and 107 are slightly bevelled.

The gear wheel 104 engages a gear wheel 109, the gears 104 and 109 having substantially parallel respective axes of rotation, and providing a gear ratio of substantially 2:1. The gear wheel 109 is rotationally fast with a bevelled gear wheel 110 which engages a bevelled gear 112 on the rotor shaft 108, the gears 110 and 112 having a 1:1 gear ratio. The gear 110 is on the opposite side of the spool shaft 106 relative to the side of the spool shaft 106 on which the gear 102 is located, and has an axis of rotation which is transverse of and is in, or is substantially in, the same plane as that in which the spool shaft 106 extends. The gears 110 and 112 are forward of the gears 102 and 107, being nearer to the spool 26, and have respective axes of rotation which are mutually orthogonal.

The handle shaft 21 can be selectively coupled either to the gear wheel 102 or to the gear wheel 104 by means of respective sets of dogs, only the set 114 (which engage the wheel 104) of which can be seen in Figure 3. The lever 30 is coupled to slide the dogs along the handle shaft one way or the other, depending upon the direction in which the user pushes the lever 30, to effect the selection.

Thus, when the lever 30 is in a first position, rotation of the handle shaft 21 effects rotation of the rotor shaft 108 via the gears 102 and 107 to provide a gear ratio of 6.1:1. When the lever 30 is in a second position, rotation of the handle shaft 21 effects rotation of the rotor shaft 108 via the gears 104, 109, 110 and 112 to give an overall gear ratio of 2:1.

Without engagement by its respective set of dogs, the gear wheel 102 or 104 is able to free wheel so that it does not inhibit the action of the gear wheel 102 or 104 which is for the time being engaged by its respective set of dogs.

Whichever of the two gear wheels 102 and 104 is engaged by its respective set of dogs, oscillating motion of the spool shaft 106 along its axis is effected via a gear train comprising a gear wheel 140 which is fixed relative to the gear wheel 104, and a gear wheel 142 which is engaged by the gear wheel 140 to drive a further gear wheel 144 via a splined shaft 146 rotationally fixed to the gear wheel 142. The gear wheel 144 is provided on one side with a spigot 148 which engages an S-slot 150 in a plate 152 at an end of the spool shaft 106 which is further from the spool 26. The spigot 148 and the plate 152 together form an S-drive, to cause longitudinal oscillatory motion of the spool shaft 106.

When the gear wheel 102 is engaged by its associated set of dogs, the gear wheel 104 is driven via the pair of gear wheels 110 and 112. When the gear wheel 104 is engaged by its associated set of dogs, the gear wheel 104 is driven directly by the handle shaft 21. Either way, the ratio of turns of the rotor 22 per oscillation of the spool shaft 106 is the same; in this case just over 12.

The lever 30 is coupled to the sets of dogs via helical compressing springs 160 located in such a fashion that when the lever 30 is operated, the sets of dogs are urged in a direction to change gear, but the gear is only actually changed when the relevant set of dogs meshes with associated parts of the relevant one of the said two gears 102 and 104.

It will be appreciated that switching the lever 30 thereby changes the gearing between the bail arm speed on the one hand and the speed with which the handle 18 is rotated on the other hand. The two ratios either one of which can be selected are 6.1:1 and 2:1.

Numerous variations and modifications to the illustrated reel may occur to the reader without taking the resulting construction outside the scope of the present invention. To give one example only, the gear ratios could be changed.

## Claims

1. A fixed spool fishing reel (10) having a spool shaft (106) and a hollow rotor shaft (108) which is coaxial with the spool shaft (106) and through which the spool shaft (106) extends, the rotor shaft (108) being able to rotate about the spool shaft (106), the reel (10) being further provided with a handle shaft (21) which extends transversely of and is offset relative to the spool shaft (106), there being a first gear (102) coupled for rotation with the handle shaft (21) and also having an axis of rotation which is transverse of and offset from the spool shaft (106), the said first gear (102) engaging a second gear (107) which is on the rotor shaft (108) so that the respective axes of rotation of the first and second gears (102 and 107) are mutually orthogonal,
**characterized in that**
the said first gear (102) is selectively coupled for rotation with the handle shaft (21) and **in that** the handle shaft (21) is also selectively coupled to drive a third gear (110), having an axis of rotation which is transverse of and in or substantially in a plane in which lies the spool shaft (106), the said third gear (110) being on the opposite side of the spool shaft (106) to that side of the spool shaft (106) on which the said first gear (102) is located, and having an axis of rotation which is closer to the spool of the reel (10) than the axis of rotation of the said first gear (102), the said third gear (110) engaging a fourth gear (112) which is also on the rotor shaft (108) closer to the spool than is the said second gear (107), the respective axes of rotation of the said third and fourth gears (110 and 112) being mutually orthogonal, and **in that** the reel (10) has a selector (30, 114, 160) connected to change the gearing through which the handle shaft (21) drives the rotor shaft (108) from that comprising the said first gear (102) and the said second gear (107), to that comprising the said third gear (110) and the said fourth gear (112), thereby to change the gear ratio between rotation of the handle shaft (21) and that of the rotor shaft (108).

2. A fixed spool fishing reel (10) according to claim 1, **characterized in that** the axis of rotation of the said first gear (102) and the axis of rotation of the handle shaft (21) are one and the same.

3. A fixed spool fishing reel (10) according to claim 1 or claim 2, **characterized in that** the said first gear (102) and the second gear (107) are bevelled.

4. A fixed spool fishing reel (10) according to any preceding claim, **characterized in that** the said third gear (110) and the said fourth gear (112) are bevelled.

5. A fixed spool fishing reel (10) according to any preceding claim, **characterized in that** the said selector (30, 114, 160) comprises sliding dogs which can be selectively slid into engagement with respective different gears respectively coupled to the said second gear (107) and the said fourth gear (112).

6. A fixed spool fishing reel according to claim 5, **characterized in that** one of the said different gears is the said first gear (102).

7. A fixed spool fishing reel according to any preceding claim, **characterized in that** the gear ratio between the rotation of the handle shaft (21) and the rotation of the rotor shaft (108) is changeable by the said selector (30, 114, 160) between a gear ratio in the range from 5:1 to 8:1 to a gear ratio in the range from 1.5:1 to 3.5:1.

8. A fixed spool fishing reel according to claim 7, **characterized in that** the change in the gear ratio is between a ratio of 6.1:1 and a ratio of 2:1.

## Patentansprüche

1. Angelrolle (10) mit fester Spule, die eine Spulenwelle (106) und eine hohle Rotorwelle (108) aufweist, die koaxial mit der Spulenwelle (106) angeordnet ist und durch die sich die Spulenwelle (106) erstreckt, wobei sich die Rotorwelle (108) um die Spulenwelle (106) drehen kann, die Rolle (10) des Weiteren mit einer Griffwelle (21) versehen ist, die sich quer zur Spulenwelle (106) erstreckt und relativ zu dieser versetzt ist, wobei ein erstes Zahnrad (102) vorhanden ist, das drehfest mit der Griffwelle (21) gekoppelt ist und ebenfalls eine quer und versetzt zur Spulenwelle (106) angeordnete Drehachse aufweist, wobei das erste Zahnrad (102) in ein zweites Zahnrad (107) eingreift, das sich auf der Rotorwelle (108) befindet, so dass die jeweiligen Drehachsen des ersten und zweiten Zahnrades (102 und 107) senkrecht zueinander stehen,
**dadurch gekennzeichnet, dass**
das erste Zahnrad (102) selektiv drehfest mit der Griffwelle (21) gekoppelt ist und dadurch, dass die Griffwelle (21) ebenfalls selektiv gekoppelt ist, um ein drittes Zahnrad (110) anzutreiben, das eine Drehachse aufweist, die quer zu und in oder im Wesentlichen in einer Ebene verläuft, in der die Spulenwelle (106) liegt, wobei das dritte Zahnrad (110) auf der Seite der Spulenwelle (106) angeordnet ist, die der Seite der Spulenwelle (106) gegenüberliegt, auf der sich das erste Zahnrad (102) befindet, und eine Drehachse aufweist, die näher an der Spule der Rolle (10) gelegen ist als die Drehachse des ersten Zahnrades (102), wobei das dritte Zahnrad (110) in ein viertes Zahnrad (112) eingreift, das ebenfalls auf der Rotorwelle (108) näher als das zweite Zahnrad (107) an der Spule gelegen ist, wobei die jeweiligen Drehachsen des dritten und vierten Zahnrades (110 und 112) senkrecht zueinander stehen, und dadurch, dass die Rolle (10) einen angekoppelten Wähler (30, 114, 160) aufweist, um die Verzahnung, durch die die Griffwelle (21) die Rotorwelle (108) antreibt, von der das erste Zahnrad (102) und das zweite Zahnrad (107) umfassenden Verzahnung zu der das dritte Zahnrad (110) und das vierte Zahnrad (112) umfassenden Verzahnung zu wechseln und somit das Übersetzungsverhältnis zwischen der Drehung der Griffwelle (21) und der Drehung der Rotorwelle (108) zu ändern.

2. Angelrolle (10) mit fester Spule nach Anspruch 1, **dadurch gekennzeichnet, dass** es sich bei der Drehachse des ersten Zahnrades (102) und der Drehachse der Griffachse (21) um ein und dieselbe handelt.

3. Angelrolle (10) mit fester Spule nach Anspruch 1 oder 2, **dadurch gekennzeichnet, dass** das erste Zahnrad (102) und das zweite Zahnrad (107) abgeschrägt sind.

4. Angelrolle (10) mit fester Spule nach einem der vorstehenden Ansprüche, **dadurch gekennzeichnet, dass** das dritte Zahnrad (110) und das vierte Zahnrad (112) abgeschrägt sind.

5. Angelrolle (10) mit fester Spule nach einem der vorstehenden Ansprüche, **dadurch gekennzeichnet, dass** der Wähler (30, 114, 160) Schiebeklauen umfasst, die selektiv in Eingriff mit jeweils unterschiedlichen Zahnrädern geschoben können, die jeweils an das zweite Zahnrad (107) und das vierte Zahnrad (112) gekoppelt sind.

6. Angelrolle mit fester Spule nach Anspruch 5, **dadurch gekennzeichnet, dass** eines der unterschiedlichen Zahnräder das erste Zahnrad (102) ist.

7. Angelrolle mit fester Spule nach einem der vorstehenden Ansprüche, **dadurch gekennzeichnet, dass** das Übersetzungsverhältnis zwischen der Drehung der Griffwelle (21) und der Drehung der Rotorwelle (108) mithilfe des Wählers (30, 114, 160) zwischen einem Übersetzungsverhältnis im Bereich von 5:1 bis 8:1 bis zu einem Übersetzungsverhältnis im Bereich von 1,5:1 bis 3,5:1 veränderbar ist.

8. Angelrolle mit fester Spule nach Anspruch 7, **dadurch gekennzeichnet, dass** die Änderung des Übersetzungsverhältnisses zwischen einem Verhältnis von 6,1:1 und einem Verhältnis von 2:1 liegt.

## Revendications

1. Moulinet de pêche (10) à tambour fixe ayant un arbre de tambour (106) et un arbre de rotor creux (108) qui est coaxial à l'arbre de tambour (106) et à travers lequel s'étend l'arbre de tambour (106), l'arbre de rotor (108) étant capable de tourner autour de l'arbre (106) de tambour, le moulinet (10) étant en outre muni d'un arbre de poignée (21) qui s'étend transversalement à l'arbre de tambour (106) et qui est décalé par rapport à celui-ci, un premier engrenage (102) étant couplé pour tourner avec l'arbre de poignée (21) et ayant également un axe de rotation qui est transversal à l'arbre de tambour (106)et décalé par rapport à celui-ci, ledit premier engrenage (102) venant en prise avec un deuxième engrenage (107) qui se situe sur l'arbre de rotor (108), de telle sorte que les axes de rotation respectifs des premier et deuxième engrenages (102 et 107) soient mutuellement orthogonaux, **caractérisé en ce que** ledit premier engrenage (102) est sélectivement couplé pour tourner avec l'arbre de poignée (21) et **en ce que** l'arbre de poignée (21) est également sélectivement couplé pour entraîner un troisième engrenage (110), ayant un axe de rotation qui est transversal à et dans ou sensiblement dans un plan dans lequel se situe l'arbre de tambour (106), ledit troisième engrenage (110) étant sur le côté opposé de l'arbre de tambour (106) par rapport au côté de l'arbre à tambour (106) sur lequel se situe ledit premier engrenage (102), et ayant un axe de rotation qui est plus proche du tambour du moulinet (10) que l'axe de rotation dudit premier engrenage (102), ledit troisième engrenage (110) venant en prise avec un quatrième engrenage (112) qui est également sur l'arbre de rotor (108) plus proche du tambour que ne l'est ledit deuxième engrenage (107), les axes de rotation respectifs desdits troisième et quatrième engrenages (110 et 112) étant mutuellement orthogonaux, et **en ce que** le moulinet (10) a un sélecteur (30, 114, 160) raccordé pour changer l'engrenage au moyen duquel l'arbre de poignée(21) entraîne l'arbre de rotor (108) à partir de celui qui comprend ledit premier engrenage (102) et ledit deuxième engrenage (107) jusqu'à celui qui comprend ledit troisième engrenage (110) et ledit quatrième engrenage (112), pour ainsi changer le rapport d'engrenage entre la rotation de l'arbre de poignée (21)et celle de l'arbre de rotor (108).

2. Moulinet de pêche (10) à tambour fixe selon la revendication 1, **caractérisé en ce que** l'axe de rotation dudit premier engrenage (102) et l'axe de rotation de l'arbre de poignée(21) sont un seul et même axe.

3. Moulinet de pêche (10) à tambour fixe selon la revendication 1 ou la revendication 2, **caractérisé en ce que** ledit premier engrenage (102) et le deuxième engrenage (107) sont biseautés.

4. Moulinet de pêche (10) à tambour fixe selon l'une quelconque des revendications précédentes, **caractérisé en ce que** ledit troisième engrenage (110) et ledit quatrième engrenage (112) sont biseautés.

5. Moulinet de pêche (10) à tambour fixe selon l'une quelconque des revendications précédentes, **caractérisé en ce que** ledit sélecteur (30, 114, 160) comprend des taquets coulissants qui peuvent être déplacés sélectivement pour venir en prise avec différents engrenages respectifs qui sont couplés respectivement audit deuxième engrenage (107) et audit quatrième engrenage (112).

6. Moulinet de pêche à tambour fixe selon la revendication 5, **caractérisé en ce que** l'un desdits différents engrenages est ledit premier engrenage (102).

7. Moulinet de pêche à tambour fixe selon l'une quelconque des revendications précédentes, **caractérisé en ce que** le rapport d'engrenage entre la rotation de l'arbre de poignée (21) et la rotation de l'arbre de rotor (108) peut être changé par ledit sélecteur (30, 114, 160) pour passer d'un rapport d'engrenage situé dans la plage de 5/1 à 8/1 à un rapport d'engrenage situé dans la plage de 1,5/1 à 3,5/1.

8. Moulinet de pêche à tambour fixe selon la revendication 7, **caractérisé en ce que** le changement de rapport d'engrenage se situe entre un rapport de 6,1/1 et un rapport de 2/1.
